# EUROPEAN PATENT APPLICATION

(11) **EP 4 726 824 A1**
(43) Date of publication of application: **15.04.2026**
(21) Application number: 24872900.6
(22) Date of filing: 25.09.2024
(51) Int. Cl.: H01M 10/04, H01M 10/052

(54) **METHOD FOR ISOSTATICALLY PRESSING ELECTRODE ASSEMBLY USING PROTECTION MEMBER AS OUTER SACRIFICIAL FRAME, AND ALL-SOLID-STATE BATTERY INCLUDING PROTECTION MEMBER**

(30) Priority: 26.09.2023 KR 20230129329
(71) Applicant: LG Energy Solution, Ltd., Seoul 07335 (KR)
(72) Inventor: KIM, Yeeun, Daejeon 34122 (KR); CHOI, Seong Won, Daejeon 34122 (KR); KIM, Ji Young, Daejeon 34122 (KR); LEE, Daejin, Daejeon 34122 (KR)
(74) Representative: Goddar, Heinz J.
(86) International application number: PCT/KR2024/014478
(87) International publication number: WO 2025/071192

(57) **Abstract**

The present invention provides an isostatic pressurization method for an electrode assembly comprising a positive electrode comprising a positive electrode current collector and a positive electrode active material layer, a negative electrode comprising a negative electrode current collector and a negative electrode active material layer, and a solid electrolyte layer, wherein the solid electrolyte layer is laminated to bond one side to the negative electrode active material layer, and a positive electrode is laminated to bond the other side of the solid electrolyte layer to the positive electrode active material layer, wherein the electrode assembly has a stacked form in which the negative electrode protrudes beyond the end of the positive electrode thereby forming a step,
wherein the isostatic pressurization is performed with a protective member in the form of a band extending vertically from the outer circumferential surface of the negative electrode end protruding from the electrode assembly to the positive electrode, wherein a space formed by the step is located between the protective member and the positive electrode; and an all-solid-state battery comprising the electrode assembly and the protective member.

## Description

### [Technical Field]

This application claims the benefit of priority to Korean Patent Application No. 10-2023-0129329, filed September 26, 2023, the disclosures of which are incorporated herein by reference in their entirety.

The invention relates to a method for isostatic pressurization of an electrode assembly with a protective member as an outer sacrificial frame, and an all-solid-state battery comprising the protective member.

### [Related Art]

In recent years, secondary batteries have become indispensable as a portable power source for computers and mobile devices, a power source for vehicles such as electric vehicles (EVs), hybrid vehicles (HVs), and plug-in hybrid vehicles (PHVs), or a power storage source.

In particular, lithium-ion batteries have high energy density and high-speed output, and along with their widespread adoption, there is a growing need for additional performance enhancements and reliability improvements.

In recent years, to improve the safety of lithium-ion secondary batteries, all-solid-state batteries have been commercialized, which do not use flammable electrolytes as electrolytes but solid electrolytes made of ceramics or ion-conducting polymers.

An all-solid-state battery has a layered solid electrolyte between the positive electrode and negative electrode active layers, thereby constituting an electrode. Although it is possible to form these solid electrolyte layers and active material layers of the positive electrode and negative electrode as dense thin films by the CVD method, they are generally manufactured by binding powdered electrode component materials using a binder in consideration of cost and productivity.

All-solid-state batteries are characterized by high interfacial resistance between the solid electrolyte layer and the positive electrode and negative electrode active material layers. In addition, in all-solid-state batteries manufactured using powdered materials, interfacial resistance occurs between particles even within the solid electrolyte layer and the positive electrode and negative electrode active material layers. Therefore, in order to reduce this interfacial resistance, a process is being carried out in which an electrode in which a positive electrode active material layer, a solid electrolyte layer, and a negative electrode active material layer are laminated is pressurized at high pressure (e.g., about 100 to 500 MPa of surface pressure) to improve the charge density of each layer.

Since tensile stress may be applied in a direction orthogonal to the direction of pressurization when the electrode is pressurized, a short circuit may occur when the end of the positive electrode active material layer and the end of the negative electrode active material layer, which face each other through the solid electrolyte layer, come into contact. Therefore, it is proposed to design, for example, a smaller width of one active material layer (e.g., a positive electrode active material layer) to prevent the short circuit. Also proposed is a configuration in which the ends of the solid electrolyte layer or the ends of the positive electrode and negative electrode active material layers are covered with an insulator.

In addition, the pressurization process is typically performed by isostatic pressurization, where high pressure is applied to the outermost edge of the cell, causing the edge to stretch and become thinner or rounded, and cracks in the electrode active material layer and solid electrolyte layer can occur.

### [Prior Art Reference]

### [Patent Reference]

Japanese Laid-open Patent Publication No. 2015-050149

### [Detailed Description of the Invention]

### [Technical Problem]

The present invention is designed to solve the above problems in the prior art, and aims to provide an isostatic pressurization method of an electrode assembly, wherein a short circuit between the ends of the positive electrode active material layer and the negative electrode active material layer is prevented, and the problem of the outermost edge of the cell stretching, thinning, or rounding is also prevented by applying a specific type of protective member as an outer sacrificial frame to the electrode assembly during the isostatic pressurization process of the all-solid-state battery; and an all-solid-state battery comprising the protective member.

### [Technical Solution]

To accomplish the above objectives, the present invention provides an isostatic pressurization method of an electrode assembly, which comprises a positive electrode including a positive electrode current collector and a positive electrode active material layer, a negative electrode including a negative electrode current collector and a negative electrode active material layer, and a solid electrolyte layer,
wherein the solid electrolyte layer is laminated to bond one side to the negative electrode active material layer, and a positive electrode is laminated to bond the other side of the solid electrolyte layer to the positive electrode active material layer,
wherein the electrode assembly has a stacked form in which the negative electrode protrudes beyond the end of the positive electrode thereby forming a step,
wherein the isostatic pressurization is performed with a protective member in the form of a band extending vertically from the outer circumferential surface of the negative electrode end protruding from the electrode assembly to the positive electrode.

In addition, the present invention provides an all-solid-state battery comprising an electrode assembly comprising a positive electrode including a positive electrode current collector and a positive electrode active material layer, a negative electrode including a negative electrode current collector and a negative electrode active material layer, and a solid electrolyte layer,
wherein the solid electrolyte layer is laminated to bond one side to the negative electrode active material layer, and a positive electrode is laminated to bond the other side of the solid electrolyte layer to the positive electrode active material layer,
wherein the electrode assembly has a stacked form in which the negative electrode protrudes beyond the end of the positive electrode thereby forming a step;
and a protective member in the form of a band extending vertically from the outer circumferential surface of the negative electrode end protruding from the electrode assembly to the positive electrode.

### [Advantageous Effects]

The isostatic pressurization method of an electrode assembly of the present invention provides the effects that a short circuit due to cracks between the ends of the positive electrode active material layer and the negative electrode active material layer is prevented, and the problem of the outermost edge of the cell stretching, thinning, or rounding is also prevented by applying a specific type of protective member as an outer sacrificial frame to the electrode assembly during the isostatic pressurization process of the all-solid-state battery.

Furthermore, an all-solid-state battery comprising the protective member prevents a short circuit from occurring between the ends of the positive electrode active material layer and the negative electrode active material layer, and prevents the problem of the outermost edge of the cell stretching, thinning, or rounding, thereby improving the safety and operation characteristics of the battery.

### [Brief Description of Drawing]

FIG. 1 is a diagram illustrating a conventional method of isostatic pressurization of an electrode assembly.
FIG. 2 is a diagram illustrating the problem presented by the conventional isostatic pressurization method.
FIG. 3 is a drawing illustrating one example of the isostatic pressurization method of an electrode assembly of the present invention.

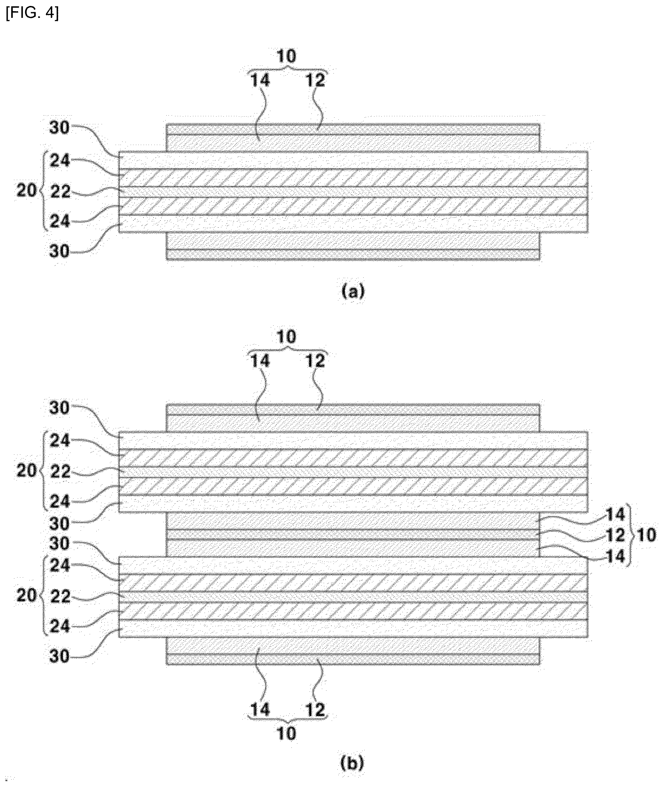

FIG. 4 is a cross-sectional view illustrating the shape of an electrode assembly of the present invention.

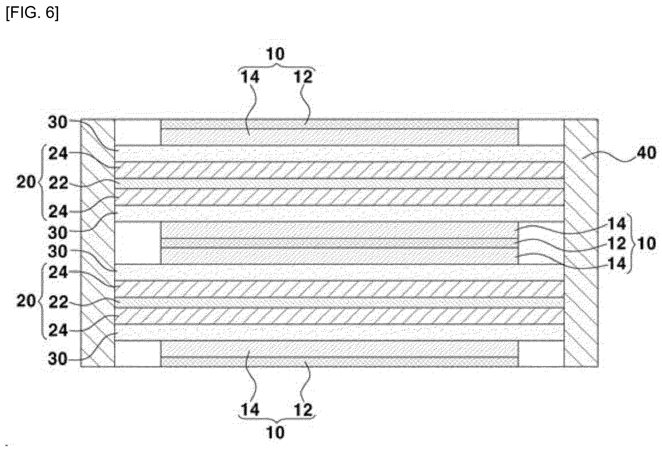

FIGs. 5 and 6 are drawings illustrating one example of the electrode assembly with a protective member of the present invention.
FIG. 7 is a drawing illustrating another example of the electrode assembly with protective member of the present invention.

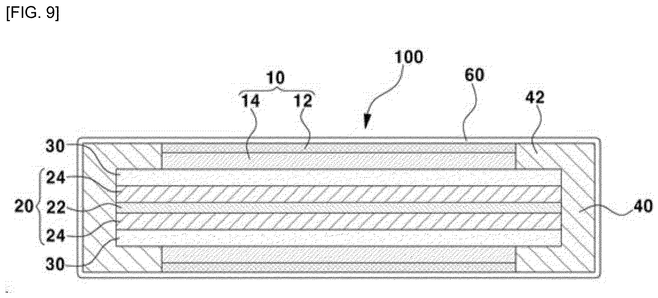

FIGs. 8 and 9 are cross-sectional views illustrating one example of an all-solid-state battery of the present invention.

### [Best Mode]

Hereinafter, examples of the present invention will now be described in detail with reference to the accompanying drawings to facilitate practice by one having ordinary skill in the art. However, the present invention may be implemented in many different forms and is not limited to the examples described herein. Throughout the specification, similar parts are designated by the same reference numerals.

When a component is referred to as being "connected to, comprised in, or installed on" another component, it should be understood that it may be directly connected or installed on the other component, but that there may be other components in between. On the other hand, when a component is referred to as being "directly connected to, directly comprised in or directly installed on" another component, it should be understood that there is no other component in between. Other expressions that describe relationships between components, such as "on top of" and "directly on top of", or "between" and "directly between", or "neighboring" and "directly neighboring", should be interpreted similarly.

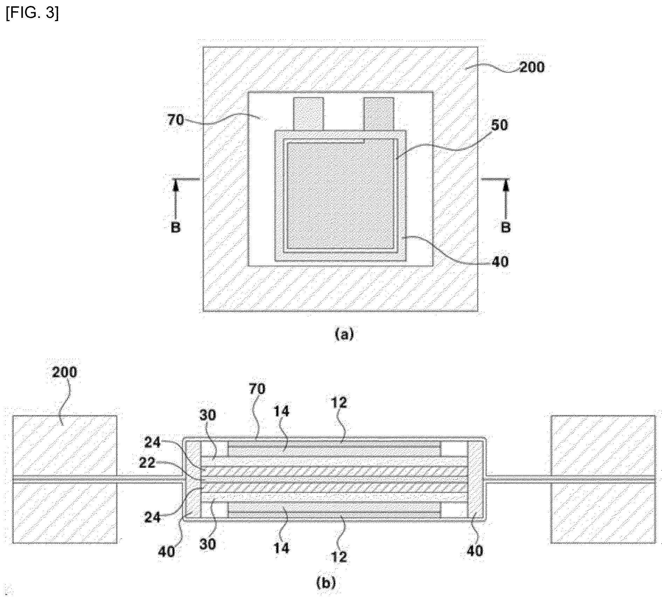

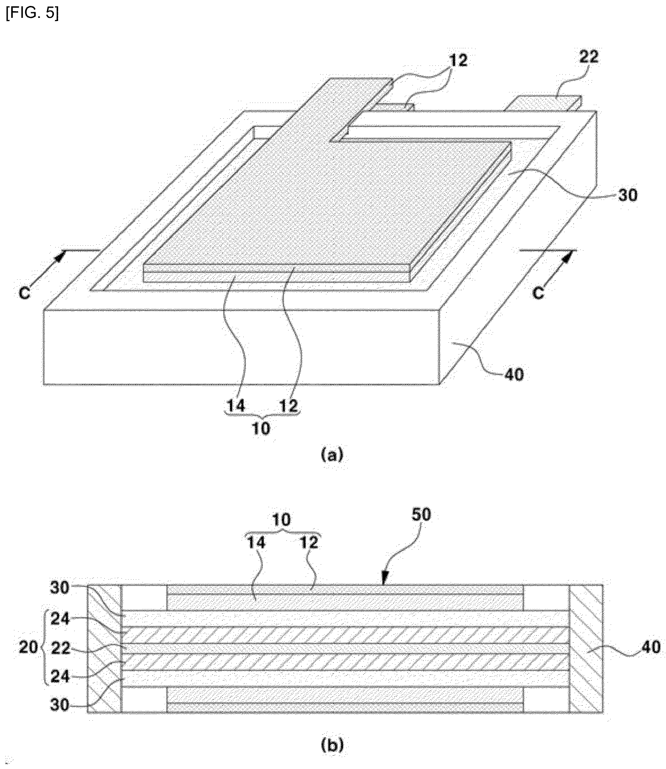

As shown in FIGs. 3 and 5, the present invention provides a isostatic pressurization method of the electrode assembly (50), which includes a positive electrode (10) comprising a positive electrode current collector (12) and a positive electrode active material layer (14), a negative electrode (20) comprising a negative electrode current collector (22) and a negative electrode active material layer (24), and a solid electrolyte layer (30),
wherein the solid electrolyte layer (30) is laminated to bond one side to the negative electrode active material layer (24), and a positive electrode (10) is laminated to bond the other side of the solid electrolyte layer (30) to the positive electrode active material layer (14),
wherein the electrode assembly (50) has a stacked form in which the negative electrode (20) protrudes beyond the end of the positive electrode (10) to form a step,
wherein the isostatic pressurization is performed with a protective member (40) in the form of a band extending vertically from the outer circumferential surface of the negative electrode (20) end protruding from the electrode assembly (50) to the positive electrode (10).

In one example of the present invention, the protective member (40) may extend, for example, to the outermost surface of the positive electrode current collector (12).

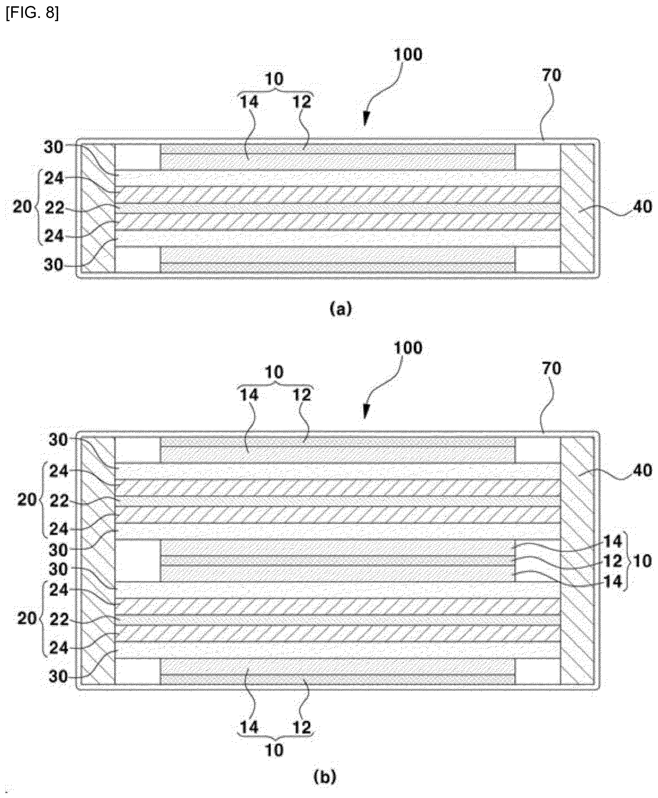

In one example of the present invention, if the electrode assembly (50) is in the form of a bicell, as shown in FIG. 8,
wherein the solid electrolyte layer (30) is laminated to bond one side to the negative electrode active material layer (24) of the negative electrode current collector (22), and a positive electrode (10) is laminated to bond the other side of the solid electrolyte layer (30) to the positive electrode active material layer (14),
wherein the protective member (40) may be in the form of a band extending vertically from the outer circumferential surface of the negative electrode (20) end protruding from the electrode assembly (50) to the outermost surface of both positive electrode current collectors (12).

The electrode assembly (50) with the protective member (40) is employed inside a pouch case (60) or film for isostatic pressurization (70), as shown in FIG. 3, and pressurized while secured to an isostatic pressurization jig (200).

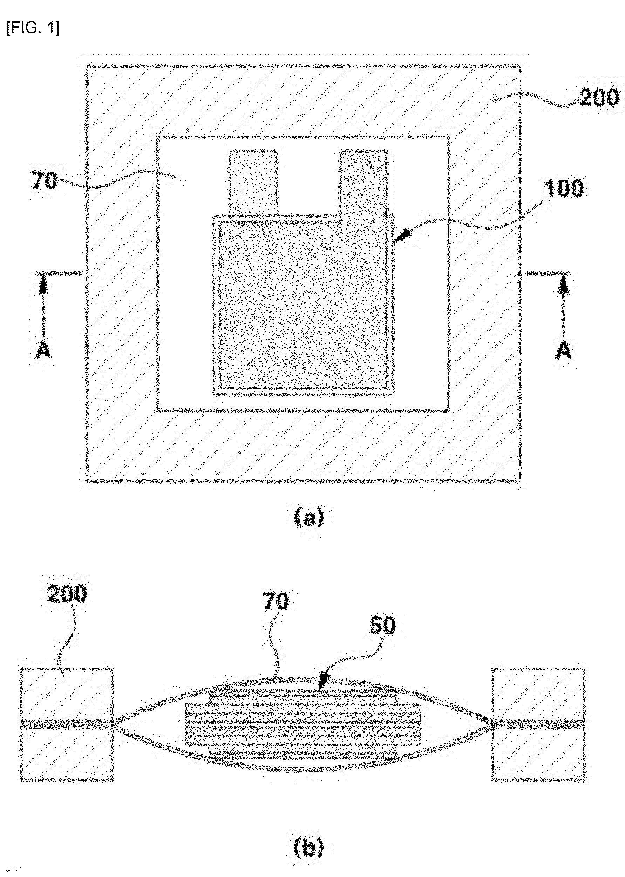

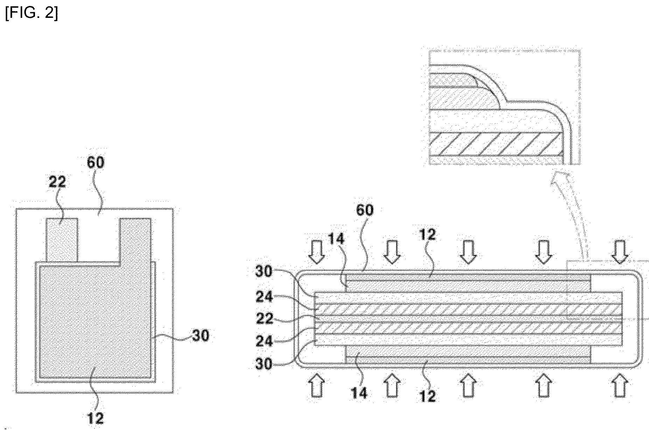

In the conventional isostatic pressurization method of an electrode assembly (50), as shown in FIGs. 1 and 2, when the electrode assembly is isostatically pressurized, a tensile stress is applied in a direction orthogonal to the pressurization direction, and as a result of the crack that occurs, the ends of the positive electrode active material layer and the negative electrode active material layer facing each other through the solid electrolyte layer come into contact, resulting in a short circuit. In addition, the edge of the electrode assembly is stretched and thinned or rounded, causing cracks in the electrode active material layer and solid electrolyte layer.

The present invention solves the above problems, and is characterized by performing isostatic pressurization with a protective member (40) in the form of a band as shown in FIGs. 3 and 5 as an outer sacrificial frame.

In one example of the present invention, the solid electrolyte layer (30) is laminated over the entire area of the negative electrode active material layer (24), whereby the step may also be formed between the solid electrolyte layer (30) and the positive electrode (10).

In one example of the present invention, between the protective member (40) and the positive electrode (10), a space formed by the step may be located, as shown in FIGs. 3 and 5. The space formed by the step acts as a buffer space for the high pressure exerted by the isostatic pressurization, preventing the outermost edge of the electrode assembly (50) from stretching, thinning, and rounding, and cracks in the electrode active material layer and the solid electrolyte layer.

In one example of the present invention, the protective member (40) is easy to attach to or detach from the electrode assembly (50) under isostatic pressurization. In other words, the protective member may be employed in a battery case, such as a pouch, while secured to the electrode assembly, but in some cases may be removed after isostatic pressurization. In this case, a protective member (40) in the form of a band according to the present invention is preferred because it is easy to attach and detach and can also be recycled.

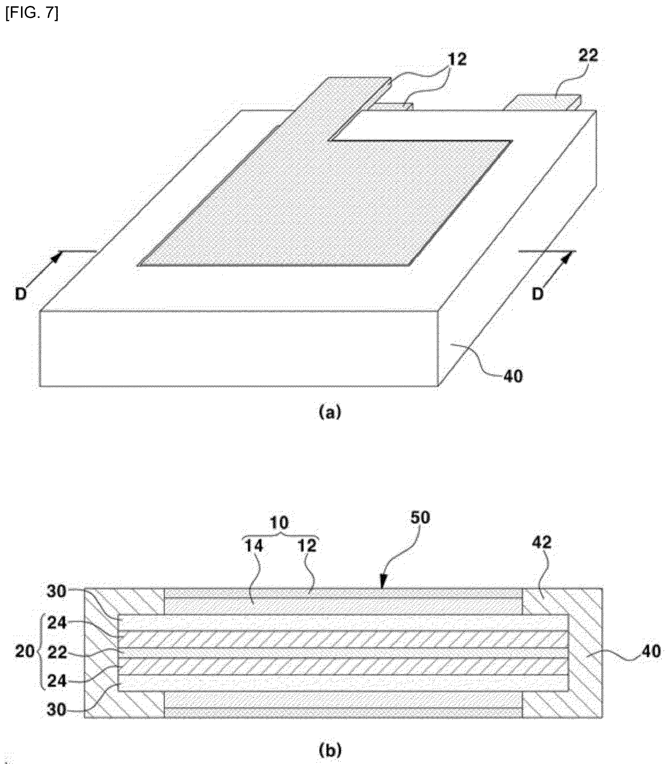

In one example of the present invention, the space formed by the step may be filled with a lateral extension (42) of the protective member (40), as shown in FIG. 7. By filling the space formed by the step difference, the lateral extension (42) prevents the outermost edge of the electrode assembly (50) from being stretched, thinned and rounded by high pressure, and cracks of the electrode active material layer and the solid electrolyte layer from being formed.

In one example of the present invention, the protective member (40) preferably has a range of shrinkage equal to or similar to the extent to which the electrode assembly is shrunk by pressurization. Specifically, the protective member (40) may preferably shrink by pressurization by a factor of 0.8 to 1.2, preferably 0.9 to 1.1 times the extent to which the electrode assembly shrinks by pressurization.

For example, the protective member in which a compression force deflection (CFD) 50% is between 2000 and 4000 kPa could be used. The above CFD measurement method is one of the ways to evaluate the stiffness of a material, for example, if a force of 3000 kPa is required to shrink a material to 50% of its initial thickness, then CFD 50% is defined as 3000 kPa.

The protective member (40) may preferably extend vertically from the outer circumferential surface of the negative electrode (20) end protruding from the electrode assembly (50) to the outermost surface of the positive electrode current collector (12), but may also extend slightly higher than the outermost surface of the positive electrode current collector (12) considering elasticity. In this case, when high pressure is applied by isostatic pressurization, the protective member (40) may shrink due to elasticity, providing the intended effect of the present invention. Specifically, it may be preferably used to have a length that compresses under isostatic pressurization to the outermost surface of the positive electrode current collector (12). Furthermore, the same or similar effect can be expected if it extends to a position slightly lower than the outermost surface of the positive electrode current collector (12).

In one example of the present invention, the material of the protective member is not particularly limited, but, for example, polymeric materials such as rubber, silicone, Gore-Tex, PVC, EVA, and the like may be preferably used.

In one example of the present invention, the protective member (40) may be formed with through holes or grooves, as shown in FIGs. 5 and 7, such that the negative electrode tabs formed on the negative electrode current collector (22) and the positive electrode tabs formed on the positive electrode current collector (12) protrude outside the protective member (40).

The present invention also provides an all-solid-state battery, as shown in FIG. 8,
comprising an electrode assembly (50) comprising a positive electrode (10) including a positive electrode current collector (12) and a positive electrode active material layer (14), a negative electrode (20) including a negative electrode current collector (22) and a negative electrode active material layer (24), and a solid electrolyte layer (30),
wherein the solid electrolyte layer (30) is laminated to bond one side to the negative electrode active material layer (24), and a positive electrode (10) is laminated to bond the other side of the solid electrolyte layer (30) to the positive electrode active material layer (14);
wherein the electrode assembly (50) has a stacked form in which the negative electrode (20) protrudes beyond the end of the positive electrode (10) to form a step; and
a protective member (40) in the form of a band extending vertically from the outer circumferential surface of the negative electrode (20) end protruding from the electrode assembly (50) to the positive electrode (10).

In one example of the present invention, if the electrode assembly (50) is in the form of a bicell, as shown in FIG. 8,
wherein the solid electrolyte layer (30) is laminated to bond one side to the negative electrode active material layer (24) of the negative electrode current collector (22), and a positive electrode (10) is laminated to bond the other side of the solid electrolyte layer (30) to the positive electrode active material layer (14),
wherein the protective member (40) may be in the form of a band extending vertically from the outer circumferential surface of the negative electrode (20) end protruding from the electrode assembly (50) to the outermost surface of both positive electrode current collectors (12).

For the all-solid-state battery of the present invention, all of the above-described isostatic pressurization method can be applied, and therefore, redundant descriptions will be omitted.

In one example of the present invention, the solid electrolyte layer (30) is laminated over the entire area of the negative electrode active material layer (24), whereby the step may also be formed between the solid electrolyte layer (30) and the positive electrode (10).

In one example of the present invention, between the protective member (40) and the positive electrode (10), a space formed by the step may be located.

The all-solid-state battery (100) may have a structure in which the electrode assembly (50) and the protective member (40) are assembled and stored in a battery case, such as a pouch case, as shown in FIG. 8.

In one example of the present invention, the protective member (40) preferably has a range of shrinkage equal to or similar to the extent to which the electrode assembly is shrunk by pressurization. Specifically, the protective member (40) may preferably shrink by pressurization by a factor of 0.8 to 1.2, preferably 0.9 to 1.1 times the extent to which the electrode assembly shrinks by pressurization.

For example, the protective member in which a compression force deflection (CFD) 50% is between 2000 and 4000 kPa could be used. The above CFD measurement method is one of the ways to evaluate the stiffness of a material, for example, if a force of 3000 kPa is required to shrink a material to 50% of its initial thickness, then CFD 50% is defined as 3000 kPa.

The protective member (40) may preferably extend vertically from the outer circumferential surface of the negative electrode (20) end protruding from the electrode assembly (50) to the outermost surface of the positive electrode current collector (12), but may also extend slightly higher than the outermost surface of the positive electrode current collector (12) considering elasticity. In this case, when high pressure is applied by isostatic pressurization, the protective member (40) may shrink due to elasticity, providing the intended effect of the present invention. Specifically, it may be preferably used to have a length that compresses under isostatic pressurization to the outermost surface of the positive electrode current collector (12). Furthermore, the same or similar effect can be expected if it extends to a position slightly lower than the outermost surface of the positive electrode current collector (12).

In one example of the present invention, the all-solid-state battery may be a lithium-ion all-solid-state battery.

Although the present invention has been described with reference to the preferred examples mentioned above, it is possible to make various modifications or variations without departing from the gist and scope of the present invention. Accordingly, the appended claims will cover such modifications or variations as long as they fall within the gist of the invention.

### [Reference Numerals]

| | | | |
|---|---|---|---|
| 10: | Positive electrode | 10: | Positive electrode |
| 12: | Positive electrode current collector | 14: | Positive electrode active material layer |
| 20: | Negative electrode | 22: | Negative electrode current collector |
| 24: | Negative electrode active material layer | 30: | Solid electrolyte layer |
| 40: | Protective member | 42: | Protective member lateral extension |
| 50: | Electrode Assembly | 60: | Pouch case |
| 70: | Film for isostatic pressurization | 100: | All-solid-state battery |
| 200: | Isostatic pressurization jig | | |

## Claims

1. An isostatic pressurization method of an electrode assembly, which comprises a positive electrode including a positive electrode current collector and a positive electrode active material layer, a negative electrode including a negative electrode current collector and a negative electrode active material layer, and a solid electrolyte layer, the method comprising:
laminating the solid electrolyte layer to bond one side to the negative electrode active material layer, and laminating a positive electrode to bond the other side of the solid electrolyte layer to the positive electrode active material layer, and
wherein the electrode assembly has a stacked form in which the negative electrode protrudes beyond the end of the positive electrode thereby forming a step,
**characterized in that** the isostatic pressurization is performed with a protective member in the form of a band extending vertically from the outer circumferential surface of the negative electrode end protruding from the electrode assembly to the positive electrode,
wherein a space formed by the step is located between the protective member and the positive electrode.

2. The isostatic pressurization method of an electrode assembly according to claim 1,
wherein the electrode assembly with the protective member is employed inside a pouch case or film for the isostatic pressurization, and pressurized while secured to an isostatic pressurization jig.

3. The isostatic pressurization method of an electrode assembly according to claim 1,
wherein the solid electrolyte layer is laminated over the entire area of the negative electrode active material layer, whereby the step is also formed between the solid electrolyte layer and the positive electrode.

4. The isostatic pressurization method of an electrode assembly according to claim 1,
wherein the protective member shrinks by the isostatic pressurization by a factor of 0.8 to 1.2 times the extent to which the electrode assembly shrinks by the isostatic pressurization.

5. The isostatic pressurization method of an electrode assembly according to claim 1,
wherein in the protective member, the compression force deflection (CFD) 50% is between 2000 and 4000 kPa.

6. The isostatic pressurization method of an electrode assembly according to claim 1,
wherein the protective member is made of at least one material selected from the group consisting of rubber, silicone, Gore-Tex, and polymeric materials.

7. An all-solid-state battery, comprising an electrode assembly comprising a positive electrode including a positive electrode current collector and a positive electrode active material layer, a negative electrode including a negative electrode current collector and a negative electrode active material layer, and a solid electrolyte layer,
wherein the solid electrolyte layer is laminated to bond one side to the negative electrode active material layer, and a positive electrode is laminated to bond the other side of the solid electrolyte layer to the positive electrode active material layer;
wherein the electrode assembly has a stacked form in which the negative electrode protrudes beyond the end of the positive electrode thereby forming a step; and
a protective member in the form of a band extending vertically from the outer circumferential surface of the negative electrode end protruding from the electrode assembly to the positive electrode,
wherein a space formed by the step is located between the protective member and the positive electrode.

8. The all-solid-state battery according to claim 7,
wherein the solid electrolyte layer is laminated over the entire area of the negative electrode active material layer, whereby the step is also formed between the solid electrolyte layer and the positive electrode.

9. The all-solid-state battery according to claim 7,
wherein the all-solid-state battery is a lithium-ion all-solid-state battery.
